# EUROPEAN PATENT APPLICATION

(11) **EP 4 794 031 A1**
(43) Date of publication of application: **19.08.2026**
(21) Application number: 25706614.2
(22) Date of filing: 06.01.2025
(51) Int. Cl.: H01M 4/62, C01G 49/00, H01M 10/0525

(54) **LITHIUM-REPLENISHING AGENT AND PREPARATION METHOD THEREFOR, POSITIVE ELECTRODE SHEET AND SECONDARY BATTERY**

(30) Priority: 30.12.2024 CN 202411975309
(71) Applicant: Hubei Wanrun New Energy Technology Co., Ltd., Shiyan, Hubei 442500 (CN)
(72) Inventor: WANG, Qin, Shiyan, Hubei 442500 (CN); PENG, Tangping, Shiyan, Hubei 442500 (CN); WANG, Wei, Shiyan, Hubei 442500 (CN); LV, Fei, Shiyan, Hubei 442500 (CN)
(74) Representative: Murgitroyd & Company
(86) International application number: PCT/CN2025/070789
(87) International publication number: WO 2026/143716

(57) **Abstract**

The present disclosure provides a lithium supplement and belongs to the technical field of energy storage. The lithium supplement includes: a rich-lithium lithium iron oxide material, and a coating layer coated on a surface of the rich-lithium lithium iron oxide material. A material of the coating layer includes lithium pyrophosphate. The present disclosure is beneficial for solving technical problems such as poor stability in air and poor safety of the rich-lithium cathode materials in related technologies to achieve effectively supplementation.

## Description

### TECHNICAL FIELD

The present disclosure relates to the technical field of energy storage, in particular to a lithium supplement, a manufacturing method thereof, a cathode plate, and a secondary battery.

### BACKGROUND

Lithium-ion batteries are widely used in energy storage applications, such as in new energy vehicles. During the initial charging process of the lithium-ion battery, the organic electrolyte may undergo reduction and decomposition on the surface of the anode, such as graphite, leading to the formation of a solid electrolyte interphase (SEI) film. This process results in a significant and permanent consumption of lithium from the cathode, which contributes to a low initial coulombic efficiency (ICE), reducing the capacity and energy density of the lithium-ion battery.

To address the issue of low coulombic efficiency in lithium-ion batteries, it is essential to supplement lithium to compensate for the irreversible loss of lithium. Currently, lithium supplementation methods primarily include anode lithium supplementation and cathode lithium supplementation. Compared to anode lithium supplementation, which is more challenging and requires greater investment, cathode lithium supplementation has become the main approach of lithium supplementation due to the incorporation of highcapacity materials during the cathode mixing process. An ideal cathode lithium supplement needs to meet several criteria, including good stability in air, high specific energy and volumetric energy density, lithium de-intercalation and intercalation potentials that align with the working ranges of cathode materials, and compatibility with existing manufacturing processes and battery systems.

At present, common cathode lithium supplements mainly include lithium-rich cathode materials, such as lithium-rich lithium iron oxide and lithium-rich lithium nickel oxide. However, these lithium-rich cathode materials face challenges, including poor stability in air, susceptibility to decomposition, and relatively low safety.

### SUMMARY

In view of the technical problems stated in the background, the present disclosure provides a lithium supplement, a manufacturing method of the lithium supplement, a cathode plate including the lithium supplement, and a secondary battery including the cathode plate. The present disclosure aims to solve the technical problems such as poor stability in air and poor safety of lithium-rich cathode materials in the related technologies.

In a first aspect, embodiments of the present disclosure provide a lithium supplement, including: a lithium-rich lithium iron oxide material, and a coating layer coated on a surface of the lithium-rich lithium iron oxide material. A material of the coating layer includes lithium pyrophosphate.

In the technical solutions of the embodiments of the present disclosure, the coating layer including the lithium pyrophosphate is coated on the surface of the lithium-rich lithium iron oxide material. On one hand, the lithium pyrophosphate, as an ion conductor, provides a de-intercalation channel for lithium ions while providing some capacity, thereby facilitating the movement of the lithium ions during the charging-discharging process of the battery and improving the lithium ion transport and conduction performance. On the other hand, the lithium pyrophosphate has a protective effect on the lithium-rich lithium iron oxide material, which reduces the contact of the lithium-rich lithium iron oxide material with air, improving the stability in air of the lithium-rich lithium iron oxide material. As a result, the lithium supplement achieves improved stability in air and safety stability and enhanced lithium supplementation effect.

In some embodiments, the lithium-rich lithium iron oxide material comprises titanium element.

In the above embodiments, the doping of titanium element into the lithium-rich lithium iron oxide material helps suppress the collapse and phase change of the crystal structure of the lithium-rich lithium iron oxide material during the charging-discharging process, thereby improving the material stability of the lithium supplement. Additionally, the doping of titanium element can also adjust the lattice electric field and reduce the cation mixing, thereby optimizing the ion diffusion channel, making the lithium ion diffusion more orderly, accelerating the diffusion rate of lithium ions, and improving the capacity and lithium supplementation efficiency of the lithium supplement. Furthermore, the doping of titanium element helps improve the electronic conductivity of the lithium-rich lithium iron oxide material, thereby improving the overall conductivity of the lithium supplement. Moreover, the doping of titanium element helps increase the chemical bond energy of the lithium-rich lithium iron oxide material and reduce the structural damage and performance degradation of the lithium supplement at high temperatures, thereby enhancing the safety and reliability of the battery in high-temperature environments.

In some embodiments, the thickness of the coating layer is 10 nm to 50 nm, and/or, the coating rate of the coating layer is greater than or equal to 94%.

In the above embodiments, by controlling the thickness of the coating layer within the above range, it is beneficial for the lithium pyrophosphate to effectively coat the lithium-rich lithium iron oxide material, thereby reducing the contact of the lithium-rich lithium iron oxide material with air. By controlling the coating rate of the coating layer to be greater than or equal to 94%, it is beneficial to improve the coating completeness of the lithium pyrophosphate on the lithium-rich lithium iron oxide material, thereby further reducing the contact of the lithium-rich lithium iron oxide material with air.

In a second aspect, embodiments of the present disclosure provide a method for manufacturing a lithium supplement, including:
providing a lithium-rich lithium iron oxide material; and
forming a coating layer on a surface of the lithium-rich lithium iron oxide material, wherein a material of the coating layer includes lithium pyrophosphate.

In the technical solutions of the embodiments of the present disclosure, the lithium supplement is manufactured by forming the coating layer on the surface of the lithium-rich lithium iron oxide material. The manufacturing method is simple and easy. In the lithium supplement manufactured from this method, the surface of the lithium-rich lithium iron oxide material is coated with the coating layer including the lithium pyrophosphate. On one hand, the lithium pyrophosphate, as an ion conductor, provides a de-intercalation channel for lithium ions while providing some capacity, thereby facilitating the movement of the lithium ions during the charging-discharging process of the battery and improving the lithium ion transport and conduction performance. On the other hand, the lithium pyrophosphate has a protective effect on the lithium-rich lithium iron oxide material, which reduces the contact of the lithium-rich lithium iron oxide material with air, improving the stability in air of the lithium-rich lithium iron oxide material. As a result, the lithium supplement achieves improved stability in air and safety stability and enhanced lithium supplementation effect.

In some embodiments, the step of providing the lithium-rich lithium iron oxide material includes:
proving a first lithium salt and a ferrous salt;
mixing the first lithium salt and the ferrous salt, and calcining the first lithium salt and the ferrous salt under protection of a protective gas to obtain the lithium-rich lithium iron oxide material.

In the above embodiments, the first lithium salt and the ferrous salt are mixed and then calcined under protection of the protective gas, which facilitates more effective fusion of lithium and iron elements and reduces the production of impurities, thereby improving the product performance of the lithium supplement obtained.

In some embodiments, the first lithium salt includes lithium nitrate, the ferrous salt includes ferrous oxalate, the ferrous oxalate includes titanium element, and an amount-of-substance of lithium element in the first lithium salt to a total of iron element and titanium element in the ferrous salt is (5.0 to 5.3):1.

In the above embodiments, the lithium nitrate and the ferrous oxalate are used as raw materials and calcined under protection of the protective gas. As compared to the production of the lithium-rich lithium iron oxide in the related art by mixing and reacting lithium salt or lithium oxide with ferric oxide, on one hand, the use of a large amount of high-cost lithium oxide is not required, thereby reducing the cost, and on the other hand, the reaction of lithium nitrate with ferrous oxalate requires a lower calcining temperature and a shorter calcining time, which is beneficial for saving energy. Additionally, in the oxidation-reduction reaction of lithium nitrate with ferrous oxalate, nitrogen oxide is reduced to nitrogen gas, reducing the production of nitrogen oxide and thus reducing the environmental pollution and corresponding treatment costs. Furthermore, the lithium-rich lithium iron oxide material manufactured by calcining lithium nitrate and ferrous oxalate as raw materials under protection of the protective gas exhibits less agglomeration, so that the subsequent pulverization is more convenient, it is easy to manufacture the lithium-rich lithium iron oxide material with a large specific surface area, it is beneficial for improving the electrochemical performance of the lithium-rich lithium iron oxide material, and the lithium supplementation effect of the lithium supplement is enhanced. Moreover, when titanium element is included in the ferrous salt, it is convenient to introduce titanium element into the lithium-rich lithium iron oxide material, which is beneficial for improving the electrochemical performance and thermal stability of the lithium-rich lithium iron oxide material and further enhancing the lithium supplementation effect.

In some embodiments, the calcining includes a first stage and a second stage performed sequentially.

In the first stage, the calcining is performed at a temperature of 200°C to 400°C for a time of 3 h to 5 h.

In the second stage, the calcining is performed at a temperature of 600°C to 700°C for a time of 4 h to 6 h.

In the above embodiments, by adopting two calcining stages, it is beneficial to make the oxidation-reduction reaction of the first lithium salt with the ferrous salt in the first stage sufficient while quickly removing the produced gases such as water vapor, carbon dioxide, and nitrogen oxide to reduce the reaction of these gases with lithium. In the second stage, by further increasing the reaction temperature, it is beneficial to make the reaction of the first lithium salt with the ferrous salt more sufficient, thereby obtaining the lithium-rich lithium iron oxide material with an improved purity.

In some embodiments, the forming the coating layer on the surface of the lithium-rich lithium iron oxide material includes:
mixing a second lithium salt, a pyrophosphate source, and a first solvent to obtain a first reaction material; and
mixing the lithium-rich lithium iron oxide material with the first reaction material and obtaining the lithium supplement through a first impurity removing treatment.

In the above embodiments, by mixing the lithium-rich lithium iron oxide material with the first reaction material, the second lithium salt can react with the pyrophosphate source to obtain the lithium pyrophosphate, while the lithium pyrophosphate can be deposited on the surface of the lithium-rich lithium iron oxide material to form the coating layer on the surface of the lithium-rich lithium iron oxide material, thereby obtaining the lithium supplement after performing the first impurity removing treatment.

In some embodiments, the first impurity removing treatment includes an evaporation of the first solvent, a solid-liquid separation, a drying, a sieving, and iron removing treatment.

In the above embodiments, by evaporating the first solvent, the volatilizable gas produced after mixing the lithium-rich lithium iron oxide material with the first reaction material may be removed together, thereby obtaining the lithium-pyrophosphate-coated lithium-rich lithium iron oxide with a high purity. Additionally, by evaporating and removing the first solvent, the lithium pyrophosphate is gradually precipitated and coated on the surface of the lithium-rich lithium iron oxide material to form the coating layer. Then, the lithium supplement with a high purity is obtained after the solid-liquid separation, the drying, the sieving, and the iron removing treatment.

In some embodiments, the manufacturing method of the lithium supplement satisfies at least one of the following conditions:
(1) an amount-of-substance ratio of the lithium-rich lithium iron oxide material, the lithium element in the second lithium salt, and a pyrophosphate in the pyrophosphate source is 1:(0.1 to 0.15):(0.025 to 0.04);
(2) the first solvent includes ethanol;
(3) the second lithium salt includes lithium acetate, lithium chloride, lithium nitrate, lithium citrate, or any combination thereof;
(4) the pyrophosphate source includes pyrophosphoric acid, ammonium pyrophosphate, ammonium hydrogen pyrophosphate, or any combination thereof; or
(5) a temperature of the evaporation of the first solvent is 80°C to 120°C.

In the above embodiments, by controlling the amount-of-substance ratio of the above lithium-rich lithium iron oxide material, lithium element in the second lithium salt, and pyrophosphate in the pyrophosphate source to be 1:(0.1 to 0.15):(0.025 to 0.04), it is beneficial to form an appropriate amount of the lithium pyrophosphate as the coating layer on the surface of the lithium-rich lithium iron oxide material, so that the coating is more complete, which effectively reduces the contact of the lithium-rich lithium iron oxide material with air, thereby effectively improving the capacity and stability of the lithium supplement during use. By using ethanol that has a low boiling point as the first solvent, the evaporation of the first solvent is easy. As at least one of the above described lithium salts used as the second lithium salt, during the reaction of the second lithium salt and the pyrophosphate source, the azeotropy principle of the first solvent and the acid corresponding to the anion in the second lithium salt is utilize to achieve the decomposition and/or volatilization of the anion in the second lithium salt, as well as the precipitation and crystallization of the lithium pyrophosphate, facilitating the heterogeneous nucleation on the surface of the lithium-rich lithium iron oxide material. During the heterogeneous nucleation process of the lithium pyrophosphate on the surface of the lithium-rich lithium iron oxide, as the first solvent is evaporated, lithium ions are slowly combined with the pyrophosphates, maintaining the low supersaturation of the lithium pyrophosphate, so that the lithium pyrophosphate is slowly crystallized and deposited on the surface of the lithium-rich lithium iron oxide material, allowing the coating to be more dense and complete. As at least one of the above described pyrophosphoric acid and pyrophosphate salts is used as the pyrophosphate source, a product, except for the lithium pyrophosphate, produced in the reaction of the second lithium salt and the pyrophosphate source is easily decomposed and volatilized, reducing the introduction of impurities while facilitating the precipitation and crystallization of the lithium pyrophosphate on the surface of the lithium-rich lithium iron oxide material. By controlling the evaporation temperature to be 80°C to 120 °C, the azeotropy of the first solvent and the anion in the second lithium salt is facilitated.

In a third aspect, embodiments of the present disclosure provide a cathode plate, including a current collector and a cathode material disposed on at least one side of the current collector in a thickness direction of the current collector. The cathode material includes the lithium supplement as described in the first aspect.

In this embodiment, due to the inclusion of the above lithium supplement, the cathode plate can achieve the effective lithium supplementation and improve the safety stability and the stability in air of the battery during the lithium supplementation process.

In a fourth aspect, embodiments of the present disclosure provide a secondary battery, including a cathode plate, an anode plate, and a separator. The cathode plate is the cathode plate as described in the third aspect.

In this embodiment, due to the inclusion of the above cathode plate including the above lithium supplement, the secondary battery has high safety stability and stability in air during the lithium supplementation process.

The above description is only an overview of the technical solutions of the present disclosure. In order to better understand the technical means of the present disclosure, so that it can be implemented in accordance with the contents of the description, and in order to make the above and other purposes, characteristics, and advantages of the present disclosure more clearly understood, the specific embodiments of the present disclosure are described below.

### BRIEF DESCRIPTION OF THE DRAWINGS

In order to illustrate the embodiments of the present disclosure more clearly, the drawings used in the present disclosure will be described briefly below. Apparently, the following described drawings are merely for the embodiments of the present disclosure, and other drawings can be derived from the described drawings by those of ordinary skill in the art without any creative effort.

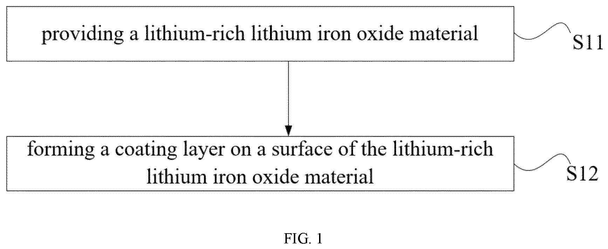

FIG. 1 is a schematic flow chart of a manufacturing method of a lithium supplement provided according to embodiments of the present disclosure.

### DETAILED DESCRIPTION

Embodiments of technical solutions of the present disclosure will now be described in detail with reference to the accompanying drawings. The following embodiments are only for illustrating the technical solutions of the present disclosure more clearly, therefore only used as examples, and they cannot be construed as limiting the protection scope of the present disclosure.

Unless otherwise defined, all technical and scientific terms used herein have the same meaning as commonly understood by persons skilled in the art to which the present disclosure pertains. The terms used herein are only for the purpose of describing specific embodiments and are not intended to limit the present disclosure. The terms "comprise" and "include" and any variations thereof in the description and claims as well as the above description of drawings of the present disclosure are intended to cover non-exclusive inclusions.

In the description of the embodiments of the present disclosure, the technical terms "first", "second", etc. are only used to distinguish different objects, and cannot be understood as indicating or implying relative importance or implicitly indicating the quantity, particular order, or primary and secondary relationship of the indicated technical features. In the description of the embodiments of the present disclosure, the "plurality" means at least two, unless otherwise specifically defined.

When "embodiment" is mentioned herein, it means that a particular feature, structure, or characteristic described based on the embodiment can be included in at least one embodiment of the present disclosure. When appeared in various places in the description, the phrase does not necessarily refer to the same embodiment, nor be a separate or alternative embodiment mutually exclusive of other embodiments. It is explicitly and implicitly understood by persons skilled in the art that the embodiments described herein can be combined with other embodiments.

In the description of the embodiments of the present disclosure, the term "and/or" only describes the association relationship of associated objects, indicating that there can be three relationships. For example, A and/or B may indicate three conditions: A alone, both A and B, and B alone. In addition, the character "/" herein generally indicates that the relationship between the former and latter objects is an "or" relationship.

In the description of the embodiments of the present disclosure, the term "a plurality of" refers to at least two (including two). Similarly, "a plurality of groups" refers to at least two groups (including two groups), and "a plurality of pieces" refers to at least two pieces (including two pieces).

Currently used materials for cathode lithium supplementation, such as lithium-rich lithium nickel oxide (Li₂NiO₂) and lithium-rich lithium iron oxide (Li₅FeO₄), have problems such as poor stability in air and poor safety, limiting their applications in the lithium supplement materials.

In order to solve the technical problems of poor stability in air and poor safety stability of the above lithium-rich cathode materials, the present disclosure provides a lithium supplement, a manufacturing method thereof, a cathode plate, and a secondary battery, wherein a coating layer containing lithium pyrophosphate is coated on a surface of a lithium-rich lithium iron oxide material. The lithium pyrophosphate, as an ion conductor, provides a de-intercalation channel for lithium ions while also providing some capacity, thereby facilitating the movement of the lithium ions during the charging-discharging process of the battery and improving the lithium ion transport and conduction performance. On the other hand, the lithium pyrophosphate has a protective effect on the lithium-rich lithium iron oxide material, which reduces the contact of the lithium-rich lithium iron oxide material with air, improving the stability in air of the lithium-rich lithium iron oxide material. As a result, the lithium supplement achieves improved stability in air and safety stability and enhanced lithium supplementation effect, thereby improving the electrochemical performance (such as the capacity and cycling performance of the battery), the stability in air, and the safety stability of the cathode plate and the secondary battery.

In a first aspect, embodiments of the present disclosure provide a lithium supplement, including: a lithium-rich lithium iron oxide material, and a coating layer coated on a surface of the lithium-rich lithium iron oxide material.

The material of the coating layer includes lithium pyrophosphate.

In some embodiments, the lithium-rich lithium iron oxide material includes titanium element.

In the above embodiments, the doping of titanium element into the lithium-rich lithium iron oxide material helps suppress the collapse and phase change of the crystal structure of the lithium-rich lithium iron oxide material during charging-discharging process, thereby improving the material stability of the lithium supplement. Additionally, the doping of titanium element can also adjust the lattice electric field and reduce the cation mixing, thereby optimizing the ion diffusion channel, making the lithium ion diffusion more orderly, accelerating the diffusion rate of lithium ions, and improving the capacity and lithium supplementation efficiency of the lithium supplement. Furthermore, the doping of titanium element helps improve the electronic conductivity of the lithium-rich lithium iron oxide material, thereby improving the overall conductivity of the lithium supplement. Moreover, the doping of titanium element helps increase the chemical bond energy of the lithium-rich lithium iron oxide material and reduce the structural damage and performance degradation of the lithium supplement at high temperatures, thereby enhancing the safety and reliability of the battery in high-temperature environments.

In some embodiments, the above lithium-rich lithium iron oxide material has a chemical formula of LiₓFe_{y}Ti_{(1-y)}O₄, wherein x is 5.05 to 5.2, and y is 0.978 to 0.995. For example, x may be 5.05, 5.1, 5.2, etc., and y may be 0.978, 0.980, 0.982, 0.985, 0.988, 0.990, 0.995, etc.

In the above embodiments, Ti element is doped into the lithium-rich lithium iron oxide material, and the amount-of-substance ratio of Ti element to Fe element is (0.005 to 0.022):(0.995 to 0.978), which helps improves the capacity and lithium supplementation efficiency of the lithium supplement while improving the stability of the lithium supplement. As the amount-of-substance ratio of Ti element to Fe element is increased or decreased, it is not beneficial to further improve the comprehensive performance such as the electrochemical performance and the thermal stability of the lithium-rich lithium iron oxide material.

In some embodiments, the above lithium supplement has a chemical formula of LiₓFe_{y}Ti_{(1-y)}O₄@Liₘ (P₂O₇)ₙ, wherein x is 5.05 to 5.2, y is 0.978 to 0.995, m is 0.1to 0.15, and n is 0.025 to 0.04. For example, x may be 5.05, 5.1, 5.2, etc., y may be 0.978, 0.980, 0.982, 0.985, 0.988, 0.990, 0.995, etc., m may be 0.1, 0.11, 0.12, 0.13, 0.14, 0.15, etc., and n may be 0.025, 0.026, 0.028, 0.03, 0.032, 0.034, 0.035, 0.037, 0.038, 0.039, 0.04, etc.

In some embodiments, the thickness of the coating layer is 10 nm to 50 nm. For example, the thickness of the coating layer may be 10 nm, 20 nm, 30 nm, 40 nm, 50 nm, etc.

In the above embodiments, by controlling the thickness of the coating layer within the above range, it is beneficial for the lithium pyrophosphate to effectively coat the lithium-rich lithium iron oxide material, so that the contact of the lithium-rich lithium iron oxide material with air is reduced.

In some embodiments, the thickness of the coating layer is 19 nm to 48 nm.

In the above embodiments, by further controlling the thickness of the coating layer, it is beneficial for the lithium pyrophosphate to more effectively coat the lithium-rich lithium iron oxide material, so that the contact of lithium-rich lithium iron oxide material with air is further reduced, and the lithium ion transport and conduction performance remains good.

In some embodiments, the coating rate of the coating layer is greater than or equal to 94%. The coating rate refers to a percentage of the coverage area of the coating layer on the surface of the lithium-rich lithium iron oxide material relative to the total surface area of the lithium-rich lithium iron oxide material. For example, the coating rate of the coating layer may be 94%, 95%, 96%, 97%, 98%, 99%, etc.

In the above embodiments, by controlling the coating rate of the coating layer to be greater than or equal to 94%, it is beneficial to improve the coating integrity of the lithium pyrophosphate on the lithium-rich lithium iron oxide material, thereby further improving the contact of the lithium-rich lithium iron oxide material with air.

In some embodiments, the coating rate of the coating layer is 94.1% to 99.1%.

In the above embodiments, by controlling the coating rate of the coating layer within the range of 94.1% to 99.1%, it is beneficial to maintain good lithium ion transport and conduction performance while improving the coating integrity of the lithium pyrophosphate on the lithium-rich lithium iron oxide material.

In some embodiments, the compaction density of the lithium supplement is 2.89 g/mL to 3.14 g/mL, preferably 2.89 g/mL to 3 g/mL.

For example, the compaction density of the lithium supplement may be 2.89 g/mL, 2.90 g/mL, 2.91 g/mL, 2.92 g/mL, 2.93 g/mL, 2.94 g/mL, 2.95 g/mL, 2.96 g/mL, 2.97 g/mL, 2.99 g/mL, 3.0 g/mL, 3.05 g/mL, 3.08 g/mL, 3.1 g/mL, 3.11 g/mL, 3.12 g/mL, 3.13 g/mL, 3.14 g/mL, etc.

In the above embodiments, by controlling the compaction density of the lithium supplement, it is beneficial to maintain high energy density of the lithium supplement, thereby improving the lithium supplementation effect.

In some embodiments, the tap density of the lithium supplement is 1.68 g/mL to 1.89 g/mL, preferably 1.68 g/mL to 1.74 g/mL.

For example, the tap density of the lithium supplement is 1.68 g/mL, 1.70 g/mL, 1.72 g/mL, 1.75 g/mL, 1.76 g/mL, 1.78 g/mL, 1.79 g/mL, 1.80 g/mL, 1.82 g/mL, 1.85 g/mL, 1.86 g/mL, 1.88 g/mL, 1.89 g/mL, etc.

In some embodiments, the specific surface area of the lithium supplement is 5.68 m²/g to 8.49 m²/g, preferably 7.27 m²/g~7.45 m²/g, which is beneficial to improve the lithium supplementation effect.

For example, the specific surface area of the lithium supplement is 5.68 m²/g, 5.70 m²/g, 5.72 m²/g, 5.75 m²/g, 5.78 m²/g, 5.79 m²/g, 5.82 m²/g, 5.85 m²/g, 5.89 m²/g, 5.92 m²/g, 5.94 m²/g, 5.98 m²/g, 6.0 m²/g, 6.05 m²/g, 6.08 m²/g, 6.12 m²/g, 6.15 m²/g, 6.18 m²/g, 6.19 m²/g, 6.21 m²/g, 6.25 m²/g, 6.28 m²/g, 6.29 m²/g, 6.32 m²/g, 6.35 m²/g, 6.37 m²/g, 6.39 m²/g, 6.45 m²/g, 6.48 m²/g, 6.52 m²/g, 6.59 m²/g, 6.68 m²/g, 6.75 m²/g, 6.79 m²/g, 6.85 m²/g, 6.89 m²/g, 6.94 m²/g, 6.98 m²/g, 7.01 m²/g, 7.08 m²/g, 7.12 m²/g, 7.15 m²/g, 7.19 m²/g, 7.25 m²/g, 7.28 m²/g, 7.31 m²/g, 7.35 m²/g, 7.37 m²/g, 7.39 m²/g, 7.45 m²/g, 7.48 m²/g, 7.51 m²/g, 7.56 m²/g, 7.58 m²/g, 7.61 m²/g, 7.64 m²/g, 7.69 m²/g, 7.72 m²/g, 7.76 m²/g, 7.79 m²/g, 7.83 m²/g, 7.85 m²/g, 7.89 m²/g, 7.92 m²/g 7.94 m²/g, 7.96 m²/g, 7.99 m²/g, 8.01 m²/g, 8.05 m²/g, 8.08 m²/g, 8.1 m²/g, 8.13 m²/g, 8.15 m²/g, 8.16 m²/g, 8.19 m²/g, 8.25 m²/g, 8.29 m²/g, 8.34 m²/g, 8.35 m²/g, 8.37 m²/g, 8.40 m²/g, 8.45 m²/g, 8.49 m²/g, etc.

In some embodiments, the pH value of the lithium supplement is 9.01 to 10.35, optionally 9.01 to 9.89.

In the above embodiments, the pH value of the lithium supplement is closer to neutral, thereby reducing the residual alkali on the surface of the lithium supplement and helping fully utilize the capacity of the lithium supplement and improve the safety and stability of the lithium supplement during lithium supplementation.

For example, the pH value of the lithium supplement may be 9.01, 9.05, 9.17, 9.15, 9.16, 9.19, 9.25, 9.28, 9.34, 9.36, 9.38, 9.40, 9.43, 9.46, 9.48, 9.5, 9.52, 9.55, 9.57, 9.59, 9.62, 9.64, 9.68, 9.7, 9.73, 9.78, 9.8, 9.85, 9.88, 9.9, 9.94, 9.97, 10.0, 10.05, 10.09, 10.12, 10.15, 10.16, 10.18, 10.2, 10.23, 10.25, 10.28, 10.3, 10.34, 10.35, etc.

In some embodiments, the D10 particle size of the lithium supplement is 0.32 µm to 0.79 µm, the D50 particle size is 1.67 µm to 5.78 µm, and the D90 particle size is 9.01 µm to 14.67 µm.

For example, the D10 particle size of the lithium supplement may be 0.32 µm, 0.35 µm, 0.38 µm, 0.4 µm, 0.42 µm, 0.45 µm, 0.48 µm, 0.47 µm, 0.5 µm, 0.52 µm, 0.55 µm, 0.56 µm, or 0.57 µm or the like. The D50 particle size of the lithium supplement may be 1.67 µm, 1.69 µm, 1.71 µm, 1.75 µm, 1.78 µm, 1.8 µm, 1.82 µm, 1.85 µm, 1.86 µm, 1.89 µm, 1.91 µm, 1.94 µm, 1.96 µm, 1.98 µm, 2.00 µm, 2.02 µm, 2.05 µm, 2.06 µm, 2.08 µm, 2.1 µm, 2.12 µm, 2.15 µm, 2.17 µm, 2.19 µm, 2.20 µm, 2.23 µm, 2.25 µm, 2.28 µm, 2.30 µm, 2.34 µm, 2.38 µm, 2.39 µm, 2.45 µm, 2.47 µm, 2.52 µm, 2.58 µm, 2.62 µm, 2.65 µm, 2.67 µm, 2.73 µm, 2.78 µm, 2.79 µm, 2.81 µm, 2.85 µm, 2.87 µm, 2.9 µm, 2.91 µm, 2.94 µm, 2.96 µm, 2.98 µm, 3.0 µm, 3.04 µm, 3.08 µm, 3.09 µm, 3.12 µm, 3.15 µm, 3.18 µm, 3.20 µm, 3.25 µm, 3.28 µm, 3.30 µm, 3.34 µm, 3.38 µm, 3.39 µm, 3.45 µm, 3.47 µm, 3.52 µm, 3.58 µm, 3.62 µm, 3.65 µm, 3.67 µm, 3.73 µm, 3.78 µm, 3.79 µm, 3.81 µm, 3.85 µm, 3.87 µm, 3.9 µm, 3.91 µm, 3.94 µm, 3.96 µm, 3.98 µm, 4.0 µm, 4.04 µm, 4.08 µm, 4.09 µm, 4.12 µm, 4.15 µm, 4.18 µm, 4.20 µm, 4.25 µm, 4.28 µm, 4.30 µm, 4.34 µm, 4.38 µm, 4.39 µm, 4.45 µm, 4.47 µm, 4.52 µm, 4.58 µm, 4.62 µm, 4.65 µm, 4.67 µm, 4.73 µm, 4.78 µm, 4.79 µm, 4.81 µm, 4.85 µm, 4.87 µm, 4.9 µm, 4.91 µm, 4.94 µm, 4.96 µm, 4.98 µm, 5.0 µm, 5.04 µm, 5.08 µm, 5.09 µm, 5.12 µm, 5.15 µm, 5.18 µm, 5.20 µm, 5.25 µm, 5.28 µm, 5.3 µm, 5.38 µm, 5.4 µm, 5.42 µm, 5.45 µm, 5.48 µm, 5.49 µm, 5.55 µm, 5.56 µm, 5.59 µm, 5.62 µm, 5.65 µm, 5.67 µm, 5.68 µm, 5.7 µm, 5.72 µm, 5.75 µm, 5.78 µm, etc.

In the above embodiments, the particle size distribution of the lithium supplement is relatively concentrated, which may improve the distribution uniformity in the cathode plate when applied to the cathode plate.

In some embodiments, the magnetic foreign matter content of the lithium supplement is 0.11 ppm to 0.13 ppm.

In some embodiments, the free lithium content of the lithium supplement is 321 ppm to 599 ppm.

In some embodiments, under conditions of 25°C and a humidity less than or equal to 10%, the initial charging specific capacity of the lithium supplement at a 0.1 C rate is 701.3 mAh/g to 760 mAh/g, preferably 714 mAh/g to 760 mAh/g. Under the conditions of 25°C and humidity less than or equal to 10%, the initial discharging specific capacity of the lithium supplement at 0.1 C rate is 4.6 mAh/g to 16.7 mmAh/g.

For example, under conditions of 25°C and a humidity less than or equal to 10%, the initial charging specific capacity of the lithium supplement at 0.1 C rate is 701.3 mAh/g, 703 mAh/g, 705 mAh/g, 710 mAh/g, 715 mAh/g, 718 mAh/g, 720 mAh/g, 723 mAh/g, 728 mAh/g, 731 mAh/g, 735 mAh/g, 739 mAh/g, 740 mAh/g, 745 mAh/g, 749 mAh/g, 750 mAh/g, 752 mAh/g, 756 mAh/g, 758 mAh/g, 759 mAh/g, 759.9 mAh/g, etc. Under conditions of 25°C and a humidity less than or equal to 10%, the initial discharging specific capacity of the lithium supplement at 0.1 C rate is 4.6 mAh/g, 4.9 mAh/g, 5.2 mAh/g, 5.5 mAh/g, 5.8 mAh/g, 5.9 mAh/g, 6.1 mAh/g, 6.2 mAh/g, 6.5 mAh/g, 6.8 mAh/g, 6.9 mAh/g, 7.2 mAh/g, 7.5 mAh/g, 7.8 mmAh/g, 7.9 mAh/g, 8.1 mAh/g, 8.2 mAh/g, 8.5 mAh/g, 8.8 mAh/g, 9.1 mAh/g, 9.2 mAh/g, 9.5 mAh/g, 9.8 mAh/g, 9.9 mAh/g, 10.2 mAh/g, 10.5 mAh/g, 10.8 mmAh/g, 10.9 mmAh/g, 11.1 mAhg, 11.2 mAhg, 11.5 mAhg, 11.8 mAh/g, 12.1 mAh/g, 12.5 mAh/g, 12.6 mAh/g, 12.9 mAh/g, 13.2 mAh/g, 13.5 mAh/g, 13.8 mAh/g, 13.9 mAh/g, 14.1 mAh/g, 14.2 mAh/g, 14.5 mAh/g, 14.8 mAh/g, 14.9 mAh/g, 15.2 mAh/g, 15.5 mAh/g, 15.8 mAh/g, 15.9 mAh/g, 16.1 mAh/g, 16.2 mAh/g, 16.5 mAh/g, 16.7 mAh/g, etc.

In some embodiments, under conditions of 25°C and a humidity less than or equal to 10%, the initial charging specific capacity of the lithium supplement at a 1 C rate is 662 mAh/g to 728 mAh/g, preferably 689 mAh/g to 728 mAh/g. Under conditions of 25°C and a humidity less than or equal to 10%, the initial charging specific capacity of the lithium supplement at 1 C rate is 2.1 mAh/g to 6.9 mAh/g.

For example, under conditions of 25°C and a humidity less than or equal to 10%, the initial charging specific capacity of the lithium supplement at a 1 C rate is 672.4 mAh/g, 675 mAh/g, 678 mAh/g, 679 mAh/g, 680 mAh/g, 685 mAh/g, 687 mAh/g, 689 mAh/g, 691 mAh/g, 693 mAh/g, 695 mAh/g, 699 mAh/g, 700 mAh/g, 701 mAh/g, 701.3 mAh/g, 703 mAh/g, 705 mAh/g, 710 mAh/g, 715 mAh/g, 718 mAh/g, 720 mAh/g, 723 mAh/g, 725 mAh/g, 726 mAh/g, 727 mAh/g, 727.5 mAh/g, etc. Under the conditions of 25°C and a humidity less than or equal to 10%, the initial discharging specific capacity of the lithium supplement at 0.1 C rate is 2.1 mAh/g, 2.3 mAh/g, 2.5 mAh/g, 2.6 mAh/g, 2.8 mAh/g, 2.9 mAh/g, 3.0 mAh/g, 3.2 mAh/g, 3.4 mAh/g, 3.7 mAh/g, 3.8 mAh/g, 4.0 mAh/g, 4.1 mAh/g, 4.3 mAh/g, 4.5 mAh/g, 4.6 mAh/g, 4.8 mAh/g, 4.9 mAh/g, 5.2 mAh/g, 5.5 mAh/g, 5.8 mAh/g, 5.9 mAh/g, 6.1 mAh/g, 6.2 mAh/g, 6.5 mAh/g, 6.8 mAh/g, 6.9 mAh/g, etc.

In some embodiments, after being placed under conditions of 25°C±1°C and a humidity less than or equal to 85%±5% for 4 h, the initial charging specific capacity of the lithium supplement at 0.1 C rate is 643 mAh/g to 750 mAh/g, preferably 671 mAh/g to 750 mAh/g, for example, 651.5 mAh/g, 671.5 mAh/g, 674.3 mAh/g, 683.2 mAh/g, 701.4 mAh/g, 749.5 mAh/g, etc. After being placed under conditions of 25°C±1°C and a humidity less than or equal to 85%±5% for 4 h, the initial discharging specific capacity of the lithium supplement at 0.1 C rate is 2.4 mAh/g to 11.2 mAh/g, for example, 3.1 mAh/g, 3.2 mAh/g, 4.8 mAh/g, 4.9 mAh/g, 8.1 mAh/g, 10.1 mAh/g, etc.

In some embodiments, after being placed under conditions of 25°C±1°C and a humidity less than or equal to 85%±5% for 4 h, the initial charging specific capacity of the lithium supplement at 1 C rate is 601 mAh/g to 720 mAh/g, preferably 643 mAh/g to 720 mAh/g, for example, 635.3 mAh/g, 687.5 mAh/g, 698.1 mAh/g, 701.3 mAh/g, etc. After being placed under conditions of 25°C±1°C and a humidity less than or equal to 85%±5% for 4 h, the initial discharging specific capacity of the lithium supplement at 1 C rate is 1.4 mAh/g to 6.2 mAh/g, for example, 1.6 mAh/g, 2.1 mAh/g, 4.2 mAh/g, 6.1 mAh/g, etc.

In some embodiments, after being placed under conditions of 25°C±1°C and a humidity less than or equal to 85%±5% for 12 h, the initial charging specific capacity of the lithium supplement at 0.1 C rate is 587 mAh/g to 749 mAh/g, preferably 641 mAh/g to 749 mAh/g, for example, 601.5 mAh/g, 633.8 mAh/g, 646.4 mAh/g, 700.2 mAh/g, 707.8 mAh/g, 748.1 mAh/g, etc. After being placed under conditions of 25°C±1°C and a humidity less than or equal to 85%±5% for 12 h, the initial discharging specific capacity of the lithium supplement at 0.1 C rate is 2.6 mAh/g to 8.6 mAh/g, for example, 2.7 mAh/g, 3.2 mAh/g, 3.6 mAh/g, 5.3 mAh/g, 7.3 mAh/g, 8.1 mAh/g, etc.

In some embodiments, after being placed under conditions of 25°C±1°C and a humidity less than or equal to 85%±5% for 12 h, the initial charging specific capacity of the lithium supplement at 1 C rate is 497 mAh/g to 718 mAh/g, preferably 617 mAh/g to 718 mAh/g, for example, 511.3 mAh/g, 604.8 mAh/g, 614.6 mAh/g, 683.7 mAh/g, etc. After being placed under conditions of 25°C±1°C and a humidity less than or equal to 85%±5% for 12 h, the initial discharging specific capacity of the lithium supplement at 1 C rate is 1.9 mAh/g to 5.9 mAh/g, for example, 2.1 mAh/g, 2.4 mAh/g, 4.2 mAh/g, 5.1 mAh/g, 5.9 mAh/g, etc.

In some embodiments, the above initial charging specific capacity and initial discharging specific capacity of the lithium supplement are obtained by preparing a cathode plate with the lithium supplement, assembling a button battery using the cathode plate, and testing the button battery.

In some embodiments, the cathode plate includes a cathode active substance, a binder, and a conductive agent. The cathode active substance is the lithium supplement as described above. The binder is preferably polyvinylidene fluoride (PVDF) or other binding materials suitable for the cathode plate. The conductive agent is preferably a carbon conductive material, such as conductive carbon black (SP). The above cathode active substance, binder, and conductive agent are formulated in an appropriate mass ratio, and an aluminum sheet is used as a current collector to prepare the cathode plate. The mass ratio of the cathode active substance, the binder, and the conductive agent may be 78:8:14.

In a second aspect, embodiments of the present disclosure provide a manufacturing method of a lithium supplement, as shown in FIG. 1, including:
S11, providing a lithium-rich lithium iron oxide material; and
S12, forming a coating layer on a surface of the lithium-rich lithium iron oxide material, wherein the material of the coating layer includes lithium pyrophosphate.

In the manufacturing method of the lithium supplement provided in the embodiments of the present disclosure, the lithium supplement is obtained by forming the coating layer on the surface of the lithium-rich lithium iron oxide material, wherein the material of the coating layer includes the lithium pyrophosphate. The manufacturing method is simple and easy. The surface of the lithium-rich lithium iron oxide material prepared from this method is coated with the coating layer containing the lithium pyrophosphate. On one hand, the lithium pyrophosphate, as an ion conductor, provides a de-intercalation channel for lithium ions while also providing some capacity, thereby facilitating the movement of the lithium ions during the charging-discharging process of the battery and improving the lithium ion transport and conduction performance. On the other hand, the lithium pyrophosphate has a protective effect on the lithium-rich lithium iron oxide material, which reduces the contact of the lithium-rich lithium iron oxide material with air, improving the stability in air of the lithium-rich lithium iron oxide material. As a result, the lithium supplement achieves improved stability in air and safety stability and enhanced lithium supplementation effect.

The above lithium-rich lithium iron oxide material can be obtained through commercial sources or by self-synthesis.

In some embodiments, the lithium supplement as described above is obtained by the manufacturing method of the lithium supplement provided in the present disclosure.

In some embodiments, the S11 of providing the lithium-rich lithium iron oxide material may include:
S111, providing a first lithium salt and a ferrous salt; and
S112, mixing the first lithium salt and the ferrous salt and calcining the first lithium salt and the ferrous salt under protection of a protective gas, to obtain the lithium-rich lithium iron oxide material.

In the above embodiments, the first lithium salt and the ferrous salt are mixed and then calcined under protection of the protective gas, which facilitates more effective fusion of lithium and iron elements and reduces the production of impurities, thereby improving the product performance of the lithium supplement obtained.

In some embodiments, the first lithium salt includes lithium nitrate. The ferrous salt is ferrous oxalate which includes titanium element.

In the above embodiments, the lithium nitrate and the ferrous oxalate are used as raw materials and calcined under protection of the protective gas. As compared to the production of the lithium-rich lithium iron oxide in the related art by mixing and reacting lithium salt or lithium oxide with ferric oxide, on the one hand, the use of a large amount of high-cost lithium oxide is not required, thereby reducing the cost, and on the other hand, the reaction of lithium nitrate with ferrous oxalate requires lower calcining temperature and shorter calcining time, which is beneficial for saving energy. Additionally, in the oxidation-reduction reaction of lithium nitrate with ferrous oxalate, nitrogen oxide is reduced to nitrogen gas, reducing the production of nitrogen oxide and thus reducing the environmental pollution and corresponding treatment costs. Furthermore, the lithium-rich lithium iron oxide material manufactured by calcining lithium nitrate and ferrous oxalate as raw materials under protection of the protective gas exhibits less agglomeration, so that the subsequent pulverization is more convenient, it is easy to manufacture the lithium-rich lithium iron oxide material with a large specific surface area, which is beneficial for improving the electrochemical performance of the lithium-rich lithium iron oxide material, and the lithium supplementation effect of the lithium supplement is enhanced. Moreover, when titanium element is included in the ferrous salt, it is convenient to introduce titanium element into the lithium-rich lithium iron oxide material, which is beneficial for improving the electrochemical performance and thermal stability of the lithium-rich lithium iron oxide material and further enhancing the lithium supplementation effect.

The above oxidation-reduction reaction of lithium nitrate with ferrous oxalate has the following reaction formula (I):

LiNO₃+FeC₂O₄→Li₅FeO₄+NO₂+N₂+CO₂ Formula (1)

In some embodiments, the above ferrous oxalate may be doped with Ti element in a mass percentage of 0.5% to 4%, preferably the above ferrous oxalate is doped with Ti element in a mass percentage of 1% to 3%. For example, in the ferrous oxalate, the mass percentage of Ti element is 1%, 2%, or 3%.

In some embodiments, the particle size of the ferrous oxalate may be 5 µm to 10 µm. The particle size of the lithium nitrate may be 5 µm to 10 µm. For example, the particle size of the ferrous oxalate may be 5 µm, 6 µm, 7 µm, 8 µm, 9 µm, 10 µm, etc. The particle size of the lithium nitrate may be 5 µm, 6 µm, 7 µm, 8 µm, 9 µm, 10 µm, etc.

In the above embodiments, by controlling the particle size of the ferrous oxalate to be 5 µm to 10 µm and controlling the particle size of the lithium nitrate to be 5 µm to 10 µm, it is beneficial to ensure that the lithium nitrate and ferrous oxalate are more effectively mixed and fully reacted at the lower calcining temperature, the production of nitrogen oxide is reduced, and the agglomeration of the lithium-rich lithium iron oxide material is reduced, thereby obtaining the lithium-rich lithium iron oxide material with good dispersibility and large specific surface area and enhancing the lithium supplementation effect of the lithium supplement.

In some embodiments, in order to improve the reaction conversion rate and reduce the residual raw materials, the amount-of-substance ratio of lithium element in the first lithium salt to the total of iron element and titanium element in the ferrous salt is (5.0 to 5.3):1. Preferably, the amount-of-substance ratio of lithium element in the first lithium salt to the total of iron element and titanium element in the ferrous salt is (5.05 to 5.2):1. For example, the amount-of-substance ratio of lithium element in the first lithium salt to the total of iron element and titanium element in the ferrous salt may be 5.0:1, 5.05:1, 5.1:1, 5.2:1, 5.3:1, etc.

In some embodiments, the above first lithium salt and ferrous salt may be mixed by using a diagonal mixer or a double-screw mixer. The mixing time may be 2 h to 4 h. For example, the mixing time may be 2 h, 3 h, or 4 h. This may achieve effective mixing of materials.

In S112, by feeding the protective gas in the calcining process, on one hand, the oxidation-reduction reaction of the first lithium salt with the ferrous salt may be performed under protection of the protective gas, thereby improving the conversion rate thereof, reducing the production of impurities, and improving the purity of the lithium-rich lithium iron oxide material obtained; and on the other hand, a waste gas (such as nitrogen oxide) produced in the calcining process can be timely removed with the protective gas, further improving the yield of the lithium-rich lithium iron oxide material obtained.

In the calcining process, the flow rate for feeding the protective gas may be 0.1 m/s to 0.3 m/s. Additionally, an induced draft fan may be used to circulate the protective gas in the reactor and to remove the waste gas. For example, the flow rate for feeding the protective gas may be 0.1 m/s, 0.2 m/s, or 0.3 m/s.

In some embodiments, the protective gas may include: a nitrogen gas, an argon gas, and/or a helium gas or the like.

In some embodiments, in S112, in the process of mixing the first lithium salt and ferrous salt and calcining the first lithium salt and ferrous salt under protection of the protective gas to obtain the lithium-rich lithium iron oxide material, the manufacturing method further includes: using a hydrogen peroxide solution with a mass fraction of hydrogen peroxide of 0.1%~0.3% to absorb the waste gas removed with the protective gas, to obtain a dilute nitric acid solution. The dilute nitric acid solution may be used to further manufacture lithium nitrate, and the lithium nitrate manufactured may be recycled as the first lithium salt in the manufacturing of the lithium-rich lithium iron oxide material, thereby achieving the recycling of the waste gas and facilitating the reduction in the process cost and the environmental pollution.

In some embodiments, when the hydrogen peroxide solution is used to absorb the waste gas to obtain the dilute nitric acid solution, lithium carbonate may be added and dissolved to the dilute nitric acid solution, and then the dilute nitric acid solution may be concentrated and crystallized to obtain lithium nitrate crystal, thereby achieving the manufacturing of the lithium nitrate.

In some embodiments, the above calcining may include a first stage and a second stage performed sequentially.

In the first stage, the temperature of the calcining is 200°C to 400°C, and the temperature-holding time in the calcining is 3 h to 5 h.

In the second stage, the temperature of the calcining is 600°C to 700°C, and the temperature-holding time in the calcining is 4 h to 6 h.

For example, in the first stage, the temperature of the calcining may be 200°C, 220°C, 230°C, 240°C, 250°C, 260°C, 270°C, 280°C, 290°C, 300°C, 310°C, 320°C, 330°C, 340°C, 350°C, 360°C, 380°C, 390°C, or 400°C, and the temperature-holding time in the calcining may be 4 h, 5 h, or 6 h.

In the second stage, the temperature of the calcining may be 600°C, 620°C, 630°C, 640°C, 650°C, 660°C, 670°C, 680°C, 690°C, or 700°C, and the temperature-holding time in the calcining may be 4 h, 5 h, or 6 h.

In the above embodiments, by adopting two calcining stages, it is beneficial to make the oxidation-reduction reaction of the first lithium salt with the ferrous salt in the first stage sufficient while quickly removing the produced gases such as water vapor, carbon dioxide, and nitrogen oxide to reduce the reaction of these gases with lithium. In the second stage, by further increasing the reaction temperature, it is beneficial to make the reaction of the first lithium salt with the ferrous salt more sufficient, thereby obtaining the lithium-rich lithium iron oxide material with an improved purity.

In some embodiments, in the first stage, the heating rate in the calcining may be 100°C/h to 200°C/h, and in the second stage, the heating rate of in the calcining may be 50°C/h to 100°C/h. For example, in the first stage, the heating rate in the calcining may be 100°C/h, 120°C/h, 130°C/h, 150°C/h, 160°C/h, 180°C/h, 200°C/h, etc., and in the second stage, the heating rate in the calcining may be 50°C/h, 60°C/h, 70°C/h, 80°C/h, 90°C/h, 100°C/h, etc.

In some embodiments, after the calcining is completed, the material may be cooled to a temperature less than or equal to 80°C before being discharged.

In some embodiments, in order to further improve the lithium supplementation performance of the lithium supplement and the coating effect of the lithium pyrophosphate on the surface of the lithium-rich lithium iron oxide material, the particle size of the above lithium-rich lithium iron oxide material may be 1 µm to 5 µm.

In some embodiments, the material obtained after the calcining is completed may be cooled to a temperature less than or equal to 80°C to obtained a cooled material. The cooled material is subjected to a pulverizing treatment to obtain the lithium-rich lithium iron oxide material.

In some embodiments, after being discharged, and before forming the coating layer on the surface of the lithium-rich lithium iron oxide material, the lithium-rich lithium iron oxide material may be conveyed to a sealed reactor in a negative-pressure conveying manner. Specifically, in order to reduce the contact of the lithium-rich lithium iron oxide material with air, the lithium-rich lithium iron oxide material may be conveyed to a pulverizer for pulverizing by the negative-pressure conveying. After the conveying is completed, the above lithium-rich lithium iron oxide material with the particle size of 1 µm to 5 µm may be obtained. In order to further reduce the contact of the lithium-rich lithium iron oxide material with air, the protective gas may be fed into the pulverizer during the above pulverizing process to protect the lithium-rich lithium iron oxide material. The protective gas may be, for example, nitrogen gas with a dew point of lower than or equal to -75°C. In order to reduce the pollution caused by the pulverizer to the lithium-rich lithium iron oxide material, the part of the pulverizer in contact with the lithium-rich lithium iron oxide material during the pulverizing in the pulverizer may be made of a ceramic material.

Similar to the above pulverizing, in order to further reduce the contact of the lithium-rich lithium iron oxide material with air before reacting with the first lithium salt and the pyrophosphate source in the sealed reactor, the protective gas may be fed into the sealed reactor during the negative-pressure conveying process to protect the lithium-rich lithium iron oxide material conveyed to the sealed reactor. The protective gas may be, for example, nitrogen gas with the dew point of lower than or equal to -75°C.

In some embodiments, the specific implementation manner of forming the coating layer on the surface of the lithium-rich lithium iron oxide material as described above is not limited, and all manufacturing methods that may coat the lithium pyrophosphate on the surface of the lithium-rich lithium iron oxide material are within the scope of protection of the present disclosure.

In some embodiments, the forming the coating layer on the surface of the lithium-rich lithium iron oxide material may include:
mixing a second lithium salt, a pyrophosphate source, and a first solvent to obtain a first reaction material; and
mixing the lithium-rich lithium iron oxide material with the first reaction material and performing a first impurity removing treatment to obtain the lithium supplement.

In the above embodiments, by mixing the lithium-rich lithium iron oxide material with the second lithium salt and the pyrophosphate source, the second lithium salt can react with the pyrophosphate source to obtain the lithium pyrophosphate, while the lithium pyrophosphate can be deposited on the surface of the lithium-rich lithium iron oxide material to form the coating layer on the surface of the lithium-rich lithium iron oxide material, thereby obtaining the lithium supplement after performing the first impurity removing treatment.

In some embodiments, the above lithium-rich lithium iron oxide material may be mixed with the second lithium salt and the pyrophosphate source in the sealed reactor, and the second lithium salt and the pyrophosphate source may undergo a double decomposition reaction under protection of the protective gas. For example, before the reaction, the nitrogen gas with the dew point of lower than or equal to -75°C may be fed into the sealed reactor to replace the air in the sealed reactor, such that the humidity in the sealed reactor reaches less than or equal to 5%. Then, the sealed reactor may be heated to allow the second lithium salt and the pyrophosphate source to react at a predetermined temperature.

During this process, the mixed solution of the lithium-rich lithium iron oxide material, the second lithium salt, and the pyrophosphate source may be stirred and heated under the stirring, which is beneficial for the full reaction of the second lithium salt and the pyrophosphate source to obtain the lithium pyrophosphate, thereby achieving the deposition of the lithium pyrophosphate on the surface of the lithium-rich lithium iron oxide material. The speed of the stirring may be 150 r/min to 300 r/min.

In some embodiments, the above second lithium salt includes lithium acetate, lithium chloride, lithium nitrate, lithium citrate, or any combination thereof.

In the above embodiments, as lithium acetate, lithium chloride, lithium nitrate, lithium citrate, or any combination thereof is used as the second lithium salt, during the reaction of the second lithium salt and the pyrophosphate source, the azeotropy principle of the first solvent and the acid corresponding to the anion in the second lithium salt is utilize to achieve the decomposition and/or volatilization of the anion in the second lithium salt, as well as the precipitation and crystallization of the lithium pyrophosphate, facilitating the heterogeneous nucleation on the surface of the lithium-rich lithium iron oxide material. During the heterogeneous nucleation process of the lithium pyrophosphate on the surface of the lithium-rich lithium iron oxide, as the first solvent is evaporated, lithium ions are slowly combined with the pyrophosphates, maintaining the low supersaturation of the lithium pyrophosphate, so that the lithium pyrophosphate is slowly crystallized and deposited on the surface of the lithium-rich lithium iron oxide material, allowing the coating to be more dense and complete.

In some embodiments, the pyrophosphate source includes: pyrophosphoric acid, ammonium pyrophosphate, ammonium hydrogen pyrophosphate, or any combination thereof.

In the above embodiments, as pyrophosphoric acid, ammonium pyrophosphate, ammonium hydrogen pyrophosphate, or any combination thereof is used as the pyrophosphate source, a product, except for the lithium pyrophosphate, produced in the reaction of the second lithium salt and the pyrophosphate source is easily decomposed and volatilized, reducing the introduction of impurities while facilitating the precipitation and crystallization of the lithium pyrophosphate on the surface of the lithium-rich lithium iron oxide material.

For example, the second lithium salt and the pyrophosphate source may undergo the double decomposition reaction to produce the lithium pyrophosphate and a volatilizable gas. The volatilizable gas may be removed via the first impurity removing treatment, thereby obtaining the lithium supplement.

In some embodiments, the first solvent includes ethanol.

In the above embodiments, the ethanol as the first solvent has a low boiling point, so that the evaporation of the first solvent is easy.

In some embodiments, the initial addition amount of the first solvent is 5 to 15 times the mass of the second lithium salt.

In the above embodiments, by controlling the initial addition amount of the first solvent to be 5 to 15 times the mass of the second lithium salt, it is convenient to control the precipitation rate of the lithium pyrophosphate, allowing the coating of the lithium pyrophosphate coating more complete.

The above lithium-rich lithium iron oxide material may be in form of powder. The second lithium salt and the pyrophosphate may be dissolved in the first solvent. The second lithium salt may react with the pyrophosphate after heating to the predetermined temperature under stirring, and the solvent may be volatilized under stirring, so that the lithium pyrophosphate is deposited on the surface of the lithium-rich lithium iron oxide material.

In some embodiments, the first impurity removing treatment includes evaporation of the first solvent, solid-liquid separation, drying, sieving, and iron removing treatment.

In the above embodiments, by evaporating the first solvent, the volatilizable gas produced after mixing the lithium-rich lithium iron oxide material with the first reaction material may be removed together, thereby obtaining the lithium-rich lithium iron oxide coated with the lithium pyrophosphate. Additionally, by evaporating and removing the first solvent, the lithium pyrophosphate is gradually precipitated and coated on the surface of the lithium-rich lithium iron oxide material. Then, the lithium supplement with a high purity is obtained after the solid-liquid separation, the drying, the sieving, and the iron removing treatment.

In some embodiments, the temperature for evaporating the first solvent may be 80°C to 120°C. For example, the temperature for evaporating the first solvent may be 80°C, 90°C, 100°C, 110°C, or 120°C.

In the above embodiments, by controlling the evaporation temperature, the azeotropy of the first solvent and the anion in the second lithium salt is facilitated.

In some embodiments, the volume of the first solvent is reduced to 1/4 to 1/3 of its initial volume after the evaporation. For example, the volume of the first solvent is reduced to 1/4, 3/10, or 1/3 of its initial volume after the evaporation.

By reducing the volume of the first solvent to 1/4 to 1/3 of its initial volume after the evaporation, it is allowed to control an appropriate amount of the lithium pyrophosphate to precipitate and coat on the surface of the lithium-rich lithium iron oxide material, thereby effectively controlling the thickness of the coating layer.

In some embodiments, in order to facilitate the evaporation of the first solvent and the volatilizable gas, an exhaust pipe may be connected to the sealed reactor, so that the evaporated solvent and the volatilized volatilizable gas can be recovered by condensation.

In some embodiments, the amount-of-substance ratio of the above lithium-rich lithium iron oxide material, lithium element in the second lithium salt, and pyrophosphate in the pyrophosphate source is 1:(0.1 to 0.15):(0.025 to 0.04). For example, the amount-of-substance ratio of the above lithium-rich lithium iron oxide material, lithium element in the second lithium salt, and pyrophosphate in the pyrophosphate source may be 1:0.1:0.025, 1:0.1:0.03, 1:0.1:0.035, 1:0.1:0.04, 1:0.12:0.025, 1:0.12:0.03, 1:0.12:0.035, 1:0.12:0.04, 1:0.15:0.025, 1:0.15:0.03, 1:0.15:0.035, 1:0.15:0.04, etc.

In the above embodiments, by controlling the amount-of-substance ratio of the above lithium-rich lithium iron oxide material, lithium element in the second lithium salt, and pyrophosphate in the pyrophosphate source to be 1:(0.1 to 0.15):(0.025 to 0.04), it is beneficial to form an appropriate amount of the lithium pyrophosphate as the coating layer on the surface of the lithium-rich lithium iron oxide material, so that the coating is more complete, which effectively reduces the contact of the lithium-rich lithium iron oxide material with air, thereby effectively improving the capacity and stability of the lithium supplement during use.

In some embodiments, the coating is completed when the first solvent is evaporated such that its volume reaches 1/4 to 1/3 of its initial volume. The solvent may be removed by centrifugation and drying. Thereafter, the lithium supplement may be obtained by sieving, iron removing, and the like.

In some embodiments, the above drying may be performed under protection of a protective gas. For example, the centrifuged material may be placed and dried in a nitrogen-containing oven. The dew point of the nitrogen gas fed into the nitrogen-containing oven may be lower than or equal to -75°C. The drying temperature may be 100°C to 150°C. The drying time may be 3 h to 6 h. After the drying is completed, the lithium supplement is obtained by sieving, iron removing, and packaging.

In some embodiments, during the above centrifugation, drying, sieving, iron removing and packaging, a centrifuge used for centrifugation, the nitrogen-containing oven used for drying, a vibrating sieve used for sieving, an iron remover used for iron removing, and a packaging machine used for packaging may all be disposed in a room with constant temperature and constant humidity, which may improve the quality stability of the finished product. For example, the room with constant temperature and constant humidity may have a humidity controlled at ≤5% and a temperature of 20°C to 30°C.

In a third aspect, embodiments of the present disclosure provide a cathode plate including a current collector and a cathode material disposed on at least one side of the current collector along its thickness direction. The cathode material includes the lithium supplement as described in the first aspect.

In the cathode plate provided in the embodiments of the present disclosure, since the cathode material contained in the cathode plate includes the lithium supplement as described in the first aspect, the cathode plate may achieve effective lithium supplementation and improve the safety stability and the stability in air of the battery during the lithium supplementation process, while the high lithium ion transport and conduction performance of the battery may be maintained.

In a fourth aspect, embodiments of the present disclosure provide a secondary battery including a cathode plate, an anode plate, and a separator. The cathode plate may be the cathode plate as described in the third aspect.

In the secondary battery provided in the embodiments of the present disclosure, since the secondary battery includes the cathode plate as described in the third aspect, the secondary battery has high safety stability and stability in air during the lithium supplementation process, as well as high lithium ion transport and conduction performance.

In a fifth aspect, embodiments of the present disclosure provide an electrical device including a plurality of batteries connected in series and/or parallel. At least one of the batteries is the secondary battery as described in the fourth aspect.

In the electrical device provided in the embodiments of the present disclosure, since the batteries included in the electrical device includes the secondary battery as described in the fourth aspect, the electrical device has good safety stability and electrical stability.

The electrical device provided in the embodiments of the present disclosure may include, but is not limited to, a mobile phone, a tablet computer, a notebook computer, an electric toy, a power tool, an electric scooter, an electric vehicle, a ship, a spacecraft, etc. The electric toy may include a fixed or mobile electric toy, such as a game machine, an electric car toy, an electric ship toy, an electric airplane toy, etc. The spacecraft may include an airplane, a rocket, a space shuttle, a spaceship, etc.

Some specific examples are listed below. It should be noted that the examples described below are exemplary and are only used to illustrate the present disclosure, and should not be understood as limiting the present disclosure. If specific technologies or conditions are not specified in the embodiments, it is implemented according to the technologies or conditions described in documents in this field or product manuals. Reagents or instruments used without specifying manufacturers are all conventional products that may be obtained by commercial purchase.

### Example 1

A manufacturing method of a lithium supplement provided in Example 1 was as follows:
Step 1), lithium nitrate and ferrous oxalate were mixed and calcined at a high temperature under protection of nitrogen gas to obtain lithium-rich lithium iron oxide; the ferrous oxalate was doped with Ti element with a mass percentage of 2%, the particle size of the ferrous oxalate was 8.2 µm; the amount of substance ratio of lithium element in the lithium nitrate to a total of iron element and titanium element in the ferrous oxalate was 5.1:1; the particle size of the lithium nitrate was 8.5 µm; a diagonal mixer was used to mix the material for a time of 3 h; during the calcining process, in a first stage: the heating rate was 150°C/h, the temperature was increased to 300°C, and this temperature was held for 4 h, and in a second stage: the temperature was further increased to 650°C with a heating rate of 80°C/h, and the sintering time was 5 h; the nitrogen gas was fed such that a flow rate of the gas in the furnace was 0.2 m/s, while a waste gas was discharged out through an induced draft fan; a hydrogen peroxide solution with a mass percentage of 0.2% was used to absorb the waste gas to obtain a dilute nitric acid solution; the dilute nitric acid solution was returned, added and dissolved with lithium carbonate, and concentrated and crystallized to produce lithium nitrate; the sintered material was cooled to a temperature of 80°C before being discharged;
Step 2), the lithium-rich lithium iron oxide manufactured in Step 1) was negative-pressure conveyed to a pulverizer for pulverization; during the negative-pressure convey, the nitrogen gas with a dew point of lower than or equal to -75°C was used for gas supplementation; during the pulverization, the nitrogen gas with the dew point lower than or equal to -75°C was fed into the pulverizer for protection; the part of the pulverizer in contact with the lithium-rich lithium iron oxide was made of a ceramic material; the lithium-rich lithium iron oxide was pulverized to a particle size of 2.7 µm and then the pulverization was stopped; thereafter, anhydrous ethanol was added to a sealed reactor, and lithium acetate and pyrophosphoric acid were further added and completely dissolved under stirring and slurrying; the pulverized material was conveyed to the sealed reactor while the nitrogen gas with the dew point of lower than or equal to -75°C was fed to replace the air in the sealed reactor such that the humidity in the sealed reactor reached smaller than or equal to 5%, and then the temperature was increased under stirring at a speed of 200 r/min; an exhaust pipe was provided through which ethanol and acetic acid vapors evaporated subsequently were condensed and recovered; wherein the amount-of substance ratio of the lithium-rich lithium iron oxide, lithium acetate, and pyrophosphoric acid added was 1:0.12:0.04, the amount of the anhydrous ethanol added was 10 times the mass of the lithium acetate, the temperature was increased to 100 °C under stirring, and the stirring was performed until the volume of ethanol was evaporated to 1/4 of its initial volume and the reaction was finished; the material in the sealed reactor was conveyed through a pipeline to a centrifuge and spin-dried, and then washed with alcohol; the washed material was placed in a nitrogen-containing oven and dried, and then subjected to sieving, iron removing, and packaging to obtain the lithium-rich lithium iron oxide coated with the lithium pyrophosphate; wherein the mother solution produced in the centrifugally spin-drying was returned and added with anhydrous ethanol, lithium acetate, and pyrophosphoric acid for further use; during the drying in the nitrogen-containing oven, the dew point of the fed nitrogen gas was lower than or equal to -75°C, the drying temperature was 130°C, the drying time was 5 h, the centrifuge, oven, vibration sieve, iron remover, and packaging machine were all disposed in a room with constant temperature and constant humidity, with the humidity controlled smaller than or equal to 5% and the temperature at 20°C.

### Example 2

A manufacturing method of a lithium supplement provided in Example 2 was substantially the same as the manufacturing method of the lithium supplement provided in Example 1, except for the following difference:
in Step 1), ferrous oxalate was doped with Ti element with a mass percentage of 1%, the particle size of the ferrous oxalate was 5 µm, the amount-of-substance ratio of lithium element in lithium nitrate to a total of iron element and titanium element in the ferrous oxalate was 5.05:1, and the particle size of the lithium nitrate was 10 µm; a diagonal mixer was used to mix the materials for a time of 4 h; during the calcining process, in the first stage: the heating rate was 100°C/h, the temperature was increased to 200°C, and this temperature was held for 3 h, and in the second stage: the temperature was further increased to 600°C at a heating rate of 50°C/h, and the sintering time was 4 h; the nitrogen gas was fed such that the flow rate of the gas in the furnace was 0.1 m/s, while the waste gas was discharged out through an induced draft fan; the hydrogen peroxide solution with a mass percentage of 0.1% was used to adsorb the waste gas to obtain the dilute nitric acid solution; the dilute nitric acid solution was returned, added and dissolved with lithium carbonate, and concentrated and crystallized to manufacture the lithium nitrate;
in Step 2), the lithium-rich lithium iron oxide was pulverized to the particle size of 1.0 µm, and the pulverization was stopped; during the process of stirring and slurrying the lithium-rich lithium iron oxide, lithium acetate, and pyrophosphoric acid, the stirring speed was 150 r/min; wherein the amount-of-substance ratio of the lithium-rich lithium iron oxide, lithium acetate, and pyrophosphoric acid added was 1:0.1:0.025, and the amount of anhydrous ethanol added was 5 times the mass of the lithium acetate; temperature was increased to 80°C under stirring, the stirring was performed until the volume of the ethanol was volatilized to 1/3 of its initial volume, and then the reaction was finished; when the lithium-rich lithium iron oxide coated with the lithium pyrophosphate was dried in a nitrogen-containing oven, the dew point of the fed nitrogen gas was lower than or equal to -75°C, the drying temperature was 100°C, and the drying time was 6 h; the centrifuge, oven, vibration sieve, iron remover, and packaging machine were all disposed in a room with constant temperature and constant humidity, with the humidity controlled smaller than or equal to 5% and the temperature at 30°C.

### Example 3

A manufacturing method of a lithium supplement provided in Example 3 was substantially the same as the manufacturing method of the lithium supplement provided in Example 1, except for the following difference:
in Step 1), ferrous oxalate was doped with Ti element with a mass percentage of 3%, the particle size of the ferrous oxalate was 10 µm, the amount-of-substance ratio of lithium element in lithium nitrate to a total of iron element and titanium element in the ferrous oxalate was 5.2:1, and the particle size of the lithium nitrate was 5 µm; a diagonal mixer was used to mix the materials for a time of 2 h; during the calcining process, in the first stage: the heating rate was 200°C/h, the temperature was increased to 400°C, and this temperature was held for 5 h, and in the second stage: the temperature was further increased to 700°C at a heating rate of 100°C/h, and the sintering time was 6 h; the nitrogen gas was fed such that the flow rate of the gas in the furnace was 0.3 m/s, while the waste gas was discharged out through an induced draft fan; the hydrogen peroxide solution with a mass percentage of 0.3% was used to adsorb the waste gas to obtain the dilute nitric acid solution; the dilute nitric acid solution was returned, added and dissolved with lithium carbonate, and concentrated and crystallized to manufacture the lithium nitrate;
in Step 2), the lithium-rich lithium iron oxide was pulverized to the particle size of 5 µm, and the pulverization was stopped; during the process of stirring and slurrying the lithium-rich lithium iron oxide, lithium acetate, and pyrophosphoric acid, the stirring speed was 300 r/min; wherein the amount-of-substance ratio of the lithium-rich lithium iron oxide, lithium acetate, and pyrophosphoric acid added was 1:0.15:0.03, and the amount of anhydrous ethanol added was 15 times the mass of the lithium acetate; temperature was increased to 120°C under stirring, the stirring was performed until the volume of the ethanol was volatilized to 1/4 of its initial volume, and then the reaction was finished; when the lithium-rich lithium iron oxide coated with the lithium pyrophosphate was dried in a nitrogen-containing oven, the dew point of the fed nitrogen gas was lower than or equal to -75°C, the drying temperature was 150°C, and the drying time was 3 h; the centrifuge, oven, vibration sieve, iron remover, and packaging machine were all disposed in a room with constant temperature and constant humidity, with the humidity controlled smaller than or equal to 5% and the temperature at 25°C.

### Example 4

A manufacturing method of a lithium supplement provided in Example 4 was substantially the same as the manufacturing method of the lithium supplement provided in Example 1, except for the following difference:
in Step 1), the ferrous oxalate was doped with Ti element with a mass percentage of 0.5%.

### Example 5

A manufacturing method of a lithium supplement provided in Example 5 was substantially the same as the manufacturing method of the lithium supplement provided in Example 1, except for the following difference:
in Step 1), the ferrous oxalate was doped with Ti element with a mass percentage of 4%.

### Example 6

A manufacturing method of a lithium supplement provided in Example 6 was substantially the same as the manufacturing method of the lithium supplement provided in Example 1, except for the following difference:
in Step 1), no Ti element was doped into the ferrous oxalate.

### Example 7

A manufacturing method of a lithium supplement provided in Example 7 was substantially the same as the manufacturing method of the lithium supplement provided in Example 1, except for the following difference:
in Step 1), the amount-of-substance ratio of lithium element in lithium nitrate to a total of iron element and titanium element in ferrous oxalate was 5.0:1.

### Example 8

A manufacturing method of a lithium supplement provided in Example 8 was substantially the same as the manufacturing method of the lithium supplement provided in Example 1, except for the following difference:
in Step 1), the amount-of-substance ratio of lithium element in lithium nitrate to a total of iron element and titanium element in ferrous oxalate was 5.3:1.

### Example 9

A manufacturing method of a lithium supplement provided in Example 9 was substantially the same as the manufacturing method of the lithium supplement provided in Example 1, except for the following difference:
in Step 2), the amount-of-substance ratio of the lithium-rich lithium iron oxide, lithium acetate, and pyrophosphoric acid was 1:0.20:0.04.

### Example 10

A manufacturing method of a lithium supplement provided in Example 10 was substantially the same as the manufacturing method of the lithium supplement provided in Example 1, except for the following difference:
in Step 2), the amount-of-substance ratio of the lithium iron oxide, lithium acetate, and pyrophosphoric acid was 1:0.10:0.02.

### Comparative Example 1

A manufacturing method of a lithium supplement provided in Comparative Example 1 was substantially the same as the manufacturing method of the lithium supplement provided in Example 1, except for the following difference:
the lithium-rich lithium iron oxide manufactured in Step 1) and pulverized to the particle size of 2.7 µm was directly used as the lithium supplement.

### Testing methods and testing results

### 1. Testing of chemical composition indicators and physicochemical indicators of lithium supplements

The chemical composition indicators and physicochemical indicators of the lithium supplements provided in Examples 1-12 and Comparative Example 1 were tested, and specific testing results were shown in Table 1.

**Table 1**

| Group | Ex. 1 | Ex. 2 | Ex. 3 | Ex. 4 | Ex. 5 | Ex. 6 | Ex. 7 | Ex. 8 | Ex. 9 | Ex. 10 | Comp. Ex. 1 |
|---|---|---|---|---|---|---|---|---|---|---|---|
| Li content (%) | 21.17 | 20.36 | 22.78 | 21.14 | 20.94 | 21.28 | 20.87 | 21.99 | 21.99 | 21.09 | 22.49 |
| Fe content (%) | 33.53 | 35.89 | 31.38 | 33.62 | 33.01 | 33.76 | 33.69 | 33.46 | 33.46 | 33.58 | 36.14 |
| Ti content | 0.47% | 0.28% | 0.65% | 0.26% | 1.02% | 20.5ppm | 0.49% | 0.45% | 0.45% | 0.48% | 0.42% |
| P content (%) | 0.74 | 0.48 | 0.71 | 0.73 | 0.68 | 0.79 | 0.76 | 0.71 | 0.71 | 0.65 | 0.0009 |
| Free lithium (ppm) | 429 | 321 | 483 | 421 | 417 | 568 | 326 | 599 | 599 | 378 | 1175 |
| Magnetic substance content (ppm) | 0.12 | 0.11 | 0.13 | 0.12 | 0.12 | 0.11 | 0.11 | 0.11 | 0.11 | 0.11 | 0.17 |
| Water content (ppm) | 312 | 287 | 368 | 319 | 345 | 289 | 307 | 302 | 302 | 337 | 399 |
| Ni (ppm) | 13 | 11 | 7.8 | 12 | 12 | 12 | 12 | 12 | 12 | 12 | 12 |
| Co (ppm) | 5 | 4 | 3 | 4 | 6 | 5 | 2 | 3 | 3 | 4 | 3 |
| Cr (ppm) | 1 | 2 | 1 | 1 | 1 | 1 | 1 | 1 | 1 | 1 | 1 |

In Table 1 above, in the lithium supplements, the Fe content was determined by a potentiometric titration method, the phosphorus content was determined by a phosphomolybdic acid quinoline gravimetric method, the contents of lithium, nickel, cobalt, chromium, and titanium were determined by an inductively coupled plasma atomic emission spectroscopy method, and the free lithium content was determined by the potentiometric titration method. The water content in the lithium supplement was measured by using a Karl Fischer titration (KF) method. The magnetic foreign matters in the lithium supplement can be collected by using a magnet, dissolved in an aqua regia, and tested on an atomic absorption spectrometer.

**Table 2**

| | Ex. 1 | Ex. 2 | Ex.3 | Ex. 4 | Ex. 5 | Ex. 6 | Ex. 7 | Ex. 8 | Ex. 9 | Ex. 10 | Comp. Ex. 1 |
|---|---|---|---|---|---|---|---|---|---|---|---|
| Compaction density (g/mL)(5T pressure) | 2.95 | 2.89 | 2.99 | 2.92 | 2.89 | 3.14 | 2.93 | 2.91 | 2.91 | 2.91 | 3.57 |
| Tap density (g/mL) | 1.72 | 1.68 | 1.74 | 1.71 | 1.69 | 1.89 | 1.69 | 1.76 | 1.76 | 1.71 | 1.99 |
| BET specific surface area (m²/g) | 7.45 | 7.27 | 7.38 | 7.43 | 8.49 | 5.68 | 7.42 | 7.43 | 7.43 | 7.38 | 4.45 |
| pH value | 9.38 | 9.02 | 9.89 | 9.41 | 9.26 | 9.67 | 9.01 | 10.35 | 10.35 | 9.32 | 12.44 |
| D10 particle size (µm) | 0.46 | 0.32 | 0.79 | 0.49 | 0.32 | 0.57 | 0.43 | 0.39 | 0.39 | 0.44 | 0.78 |
| D50 particle size (µm) | 3.56 | 1.67 | 5.78 | 3.51 | 3.31 | 3.98 | 3.59 | 3.78 | 3.78 | 3.28 | 6.76 |
| D90 particle size (µm) | 9.35 | 7.64 | 14.67 | 9.99 | 9.01 | 12.56 | 10.58 | 12.47 | 12.47 | 9.59 | 23.53 |
| Thickness of coating layer (nm) | 48 | 19 | 29 | 45 | 43 | 38 | 43 | 42 | 42 | 32 | No coating layer |
| Coating rate of coating layer (%) | 99.1 | 96.2 | 97.4 | 99.0 | 98.7 | 98.5 | 95.9 | 98.2 | 97.2 | 94.1 | / |

In Table 2, the measurement method of the tap density of the lithium supplement including testing using a tap density meter, with 5000 times of vibration. The measurement method of the compaction density of the lithium supplement includes testing using a compaction density meter at a testing pressure of 3T, with a compacting time of 30 s. The pH value of the lithium supplement was obtained by an acid-base potentiometric titration method with a pH meter. The specific surface area of the lithium supplement was measured by using a BET specific surface area measurement method, such as a nitrogen adsorption multipoint BET method. The D10, D50, and D90 particle sizes in the particle size distribution of the lithium supplement can be measured by using a laser particle size analyzer, and the laser particle size analyzer can be a Mastersizer 3000-type laser particle size analyzer from Malvern Instruments Ltd in the UK. The D10 particle size refers to a particle size corresponding to the cumulative volume distribution percentage of the lithium supplement of 10%, the D50 particle size refers to a particle size corresponding to the cumulative volume distribution percentage of the lithium supplement of 50%, and the D90 particle size refers to a particle size corresponding to the cumulative volume distribution percentage of the lithium supplement of 90%.

In Table 2, the thickness of the coating layer was measured by using a transmission electron microscope. The coating rate of the coating layer was defined as the percentage of the coverage area of the coating layer on the surface of the particle (i.e., a core of the lithium-rich lithium iron oxide in the above Examples 1-10) relative to the total surface area of the particle. The coating amount of the coating layer was measured by using a diffuse reflectance infrared Fourier transform spectroscopy method, and the coating rate can be calculated based on the coating amount and the cross-sectional area (also known as the section area) of the coating layer. The calculation formula is $n = \frac{M}{q} {N}_{A} {a}_{0} / {S}_{W}$, wherein n represents the coating rate, M represents the coating amount, q represents the molecular weight of the material of the coating layer, NA represents a constant (6.023×10²³), a₀ represents the cross-sectional area of the coating layer, and S_{w} represents the specific surface area of the particle.

It can be seen from Tables 1 and 2 that the lithium supplements provided in Examples 1 to 10 of the present disclosure each have the coating layer coated on the surface of the lithium-rich lithium iron oxide material. As compared to the lithium supplement provided in Comparative Example 1, the lithium supplements provided in Examples 1 to 10 have significantly reduced free lithium content, magnetic substance content, and residual alkali content and significantly increased specific surface area due to the presence of the coating layer, which is beneficial to improve the capacity and lithium supplementation effect of the lithium supplement when applied to secondary battery. Additionally, the calcined materials obtained by the manufacturing method of the lithium supplement provided in Examples 1 to 10 have low agglomeration degree and thus is easy to be pulverized, so that the particle size of the lithium supplement finally obtained in Examples 1 to 10 is smaller and more concentrated compared to the particle size of the lithium supplement provided in Comparative Example 1, which is also beneficial to improve the capacity and lithium supplementation effect of the lithium supplement when applied to the secondary battery.

Furthermore, by comparing Example 1 to 5 with Example 6, it can be seen that the doping of Ti element into the ferrous oxalate is beneficial to reduce the content of the free lithium, thereby facilitating the improvement of the capacity and lithium supplementation effect of the lithium supplement when applied to the secondary battery. By comparing Examples 1-5, 7, and 8, it can be seen that the controlling of the amount-of substance ratio of lithium element in the lithium nitrate to a total of iron element and titanium element in the ferrous oxalate within the range of (5.05 to 5.2):1 is beneficial to reduce the free lithium content and the residual alkali content, and additionally controlling the pH value of the lithium supplement more appropriate improves the stability and lithium supplementation effect of the lithium supplement when applied to the secondary battery. By comparing Examples 1 to 5, 9, and 10, it can be seen that the controlling of the amount-of substance ratio of lithium-rich lithium iron oxide, lithium acetate, and pyrophosphoric acid within the range of 1:(0.1 to 0.15):(0.025 to 0.04) is beneficial to reduce the free lithium content and the residual alkali content, and additionally controlling the pH value of the lithium supplement more appropriate improves the stability and lithium supplementation effect of the lithium supplement when applied to the secondary battery.

The lithium supplements provided in Examples 1 to 10 have high compaction density, tap density, and specific surface area, as well as relatively small and evenly distributed particle size, which is beneficial to improve the energy density of the lithium supplement. The thickness and coating rate of the coating layer of the lithium supplements provided in Examples 1 to 10 were relatively large, which can protect the lithium-rich lithium iron oxide material in the inner layer, reduce the contact of the lithium-rich lithium iron oxide material with air, and improves the stability of the lithium supplement. Additionally, the lithium pyrophosphate as the coating layer is beneficial to improve the lithium ion conducting efficiency and maintain a high capacity of the lithium supplement.

### 2. Testing of electrical performance indicators of lithium supplements

The lithium supplements provided in Examples 1 to 10 and Comparative Example 1 were each used as a cathode active material and prepared into a cathode plate, with the proportions of the lithium supplement, SP, and PVDF being 78%, 14%, and 8%, respectively, and the surface density of the cathode plate being 3.5 mg/cm².

The cathode plate, a separator, an anode plate, and an electrolyte solution were assembled into a button battery. The separator was made of glass fiber. The anode plate was a lithium metal sheet. The solute in the electrolyte solution was LiPF₆, and the solvent in the electrolyte solution was a mixed solvent of ethylene carbonate (EC) and diethyl carbonate (DEC), with the concentration of LiPF₆ being 1 mol/L.
(1) The manufactured button battery was stilly placed at room temperature (25°C) and a humidity of smaller than or equal to 10% for 10 h, and then subjected to a charging-discharging activation. Subsequently, the above manufactured button battery was tested for its initial charging specific capacity and initial discharging specific capacity at 0.1 C rate and initial charging specific capacity and initial discharging specific capacity at 1 C rate, respectively, with a nominal gram capacity of 700 mAh/g and a voltage range of 2.00 V~4.35 V at the room temperature (25°C). The tested results of the initial charging specific capacity and initial discharging specific capacity were shown in Table 3.

**Table 3**

| | Initial charging specific capacity at 0.1 C rate (mAh/g) | Initial discharging specific capacity at 0.1 C rate (mAh/g) | Initial charging specific capacity at 1 C rate (mAh/g) | Initial discharging specific capacity at 1 C rate (mAh/g) |
|---|---|---|---|---|
| Ex.1 | 759.9 | 14.8 | 727.5 | 6.9 |
| Ex. 2 | 716.8 | 11.5 | 701.3 | 2.6 |
| Ex.3 | 731.8 | 16.7 | 711.5 | 4.7 |
| Ex.4 | 702.6 | 14.1 | 665.7 | 6.2 |
| Ex.5 | 706.7 | 10.4 | 662.5 | 5.6 |
| Ex.6 | 701.3 | 5.4 | 674.2 | 2.1 |
| Ex. 7 | 708.6 | 6.4 | 672.4 | 3.9 |
| Ex. 8 | 704.6 | 4.6 | 665.4 | 3.1 |
| Ex.9 | 714.6 | 10.5 | 689.7 | 4.1 |
| Ex. 10 | 703.5 | 10.1 | 675.2 | 4.5 |
| Comp. Ex. 1 | 678.4 | 3.1 | 641.2 | 2.5 |

It can be seen from Table 3 that the button batteries including the lithium supplements provided in Example 1 to 10 have larger initial charging capacities at 0.1 C rate and at 1 C rate. For example, the button batteries including the lithium supplements provided in Example 1 to 10 have the initial charging specific capacities at 0.1 C rate above 700 mAh/g and the initial charging specific capacities at 1 C rate above 660 mAh/g.

By comparing the results of the button batteries corresponding to the lithium supplements provided in Examples 1 to 5 and Example 6 in Table 3, it can be seen that the doping of Ti element is beneficial to improve the initial charging specific capacity, and when the doping rate of Ti element in the ferrous oxalate is 1% to 3%, it is beneficial to obtain a higher initial charging specific capacity. By comparing the results of the button batteries corresponding to the lithium supplements provided in Examples 1 to 3 and Examples 7 to 8 in Table 3, it can be seen that when the amount-of-substance ratio of the lithium nitrate to a total of iron and titanium in the ferrous oxalate is (5.05:1 to 5.2):1, it is beneficial to obtain a higher initial charging specific capacity. By comparing the results of the button batteries corresponding to the lithium supplements provided in Examples 1 to 3 and Examples 9to 10 in Table 3, it can be seen that when the molar ratio of the lithium-rich lithium iron oxide, lithium acetate, and pyrophosphoric acid is in the range of 1:(0.1 to 0.15):(0.025 to 0.04), it is beneficial to obtain a higher initial charging specific capacity.

The method for conducting the charging-discharging cycle test on the above prepared button batteries at the room temperature (25°C) within the voltage range of 2.00 V~4.35 V was as follows:

(2) The button batteries as manufactured above were subjected to the electrical performance test after being placed in an environment with a humidity of 85±5% and a temperature of 25±1°C for 4 h and 12 h. The specific testing method was the same as the above testing method after being stilly placed for 10 h at room temperature (25°C) and the humidity of smaller than or equal to 10%. The tested results of the initial charging-discharging capacity were shown in Table 4:

**Table 4**

| | Initial charging specific capacity at 0.1 C rate (mAh/g) (4h) | Initial discharging specific capacity at 0.1 C rate (mAh/g) (4h) | Initial charging specific capacity at 1 C rate (mAh/g) (4h) | Initial discharging specific capacity at 1 C rate (mAh/g) (4h) | Initial charging specific capacity at 0.1 C rate (mAh/g) (12h) | Initial discharging specific capacity at 0.1 C rate (mAh/g) (12h) | Initial charging specific capacity at 1 C rate (mAh/g) (12h) | Initial discharging specific capacity at 1 C rate (mAh/g) (12h) |
|---|---|---|---|---|---|---|---|---|
| Ex.1 | 749.5 | 11.2 | 719.7 | 6.2 | 748.l | 8.6 | 717.9 | 5.9 |
| Ex. 2 | 701.4 | 8.9 | 687.5 | 2.1 | 700.2 | 7.5 | 683.7 | 2.2 |
| Ex.3 | 721.2 | 8.1 | 701.3 | 4.2 | 707.8 | 7.3 | 694.6 | 42 |
| Ex.4 | 707.2 | 10.1 | 698.l | 6.1 | 702.1 | 8.l | 636.3 | 5.1 |
| Ex.5 | 683.2 | 8.1 | 635.3 | 4.2 | 647.8 | 5.3 | 614.6 | 4.2 |
| Ex.6 | 674.3 | 3.2 | 636.5 | 1.6 | 633.8 | 2.6 | 604.8 | 2.1 |
| Ex. 7 | 670.4 | 2.4 | 620.4 | 3.2 | 646.4 | 2.7 | 615.2 | 1.9 |
| Ex. 8 | 643.2 | 3.1 | 601.4 | 1.4 | 601.5 | 3.2 | 497.5 | 2.1 |
| Ex.9 | 671.5 | 4.9 | 643.1 | 3.2 | 641.3 | 3.6 | 617.2 | 2.4 |
| Ex. 10 | 651.5 | 4.8 | 635.8 | 3.1 | 587.1 | 3.1 | 511.3 | 2.1 |
| Comp. Ex. 1 | 456.2 | 2.1 | 398.5 | 1.1 | 354.2 | 1.6 | 298.5 | 0.8 |

It can be seen from Table 4 that the button batteries corresponding to the lithium supplements provided in Examples 1 to 10 still have the higher initial charging specific capacity in the high-humidity environment, as well as smaller change in the initial charging specific capacity when measured after being placed in the high-humidity environment for a long time, i.e., higher retention rate of the initial charging specific capacity in the high-humidity environment, suggesting that the lithium supplements provided in Examples 1 to 10 have good stability. However, in Comparative Example 1, due to the lack of coating, the lithium-rich lithium iron oxide directly contacts with carbon dioxide, water vapor and the like in the air, leading to hydrolyzation and decomposition of the lithium-rich lithium iron oxide and thus the sharply decreased capacity.

By comparing the results of the button batteries corresponding to Examples 1 to 5 with Example 6 in Table 4, it can be seen that the doping of Ti element is beneficial for the stability of the lithium supplement in the high-humidity environment. That is, the doping of Ti element is beneficial to improve the stability of the lithium supplement. By comparing the results of the button batteries corresponding to Examples 1 to 5 with Examples 7 to 8 in Table 4, it can be seen that when the amount-of-substance ratio of the lithium nitrate to a total of iron and titanium in the ferrous oxalate is in the range of (5.05 to 5.2):1, it is more beneficial for the stability of the lithium supplement in the high-humidity environment. By comparing the results of the button batteries corresponding to Examples 1 to 5 with Examples 9 to 10 in Table 4, it can be seen that when the amount-of-substance ratio of the lithium iron oxide, lithium acetate, and pyrophosphoric acid is in the range of 1:(0.1 to 0.15):(0.025 to 0.04), it is more beneficial to maintain the stability of the lithium supplement.

It should be noted that the present disclosure is not limited to the foregoing embodiments. The foregoing embodiments are merely examples, and embodiments having substantially the same configurations and effects as those of the technical conceptions within the scope of the present disclosure are all included in the technical scope of the present disclosure. In addition, various modifications that can be conceived by those skilled in the art may be made to the embodiments without departing from the spirit and scope of the present disclosure, and other embodiments that are constructed by combining some of the components in the embodiments are also included in the scope of the present disclosure.

## Claims

1. A lithium supplement, comprising: a lithium-rich lithium iron oxide material, and a coating layer coated on a surface of the lithium-rich lithium iron oxide material;
wherein a material of the coating layer comprises lithium pyrophosphate.

2. The lithium supplement according to claim 1, wherein the lithium-rich lithium iron oxide material comprises titanium element.

3. The lithium supplement according to claim 1, wherein the coating layer has a thickness of 10 nm to 50 nm and/or a coating rate of greater than or equal to 94%.

4. A method for manufacturing a lithium supplement, comprising:
providing a lithium-rich lithium iron oxide material; and
forming a coating layer on a surface of the lithium-rich lithium iron oxide material;
wherein a material of the coating layer comprises lithium pyrophosphate.

5. The method for manufacturing the lithium supplement according to claim 4, wherein the step of providing the lithium-rich lithium iron oxide material comprises:
providing a first lithium salt and a ferrous salt; and
mixing the first lithium salt and the ferrous salt, and calcining the first lithium salt and the ferrous salt under protection of a protective gas to obtain the lithium-rich lithium iron oxide material.

6. The method for manufacturing the lithium supplement according to claim 5, wherein the first lithium salt comprises lithium nitrate, the ferrous salt comprises ferrous oxalate, the ferrous oxalate comprises titanium element, and an amount-of-substance ratio of lithium element in the first lithium salt to a total of iron element and titanium element in the ferrous salt is (5.0 to 5.3):1; and/or
the calcining comprises a first stage and a second stage performed sequentially; in the first stage, the calcining is performed at a temperature of 200°C to 400°C for a time of 3 h to 5 h; and in the second stage, the calcining is performed at a temperature of 600°C to 700°C for a time of 4 h to 6 h.

7. The method for manufacturing the lithium supplement according to any one of claims 4 to 6, wherein the forming the coating layer on the surface of the lithium-rich lithium iron oxide material comprises:
mixing a second lithium salt, a pyrophosphate source, and a first solvent to obtain a first reaction material; and
mixing the lithium-rich lithium iron oxide material with the first reaction material and obtaining the lithium supplement through a first impurity removing treatment.

8. The method for manufacturing the lithium supplement according to claim 7, wherein the first impurity removing treatment comprises an evaporation of the first solvent, a solid-liquid separation, a drying, a sieving, and an iron removing treatment; and/or,
the method for manufacturing the lithium supplement satisfies at least one of the following conditions:
(1) an amount-of-substance ratio of the lithium-rich lithium iron oxide material, the lithium element in the second lithium salt, and a pyrophosphate in the pyrophosphate source is 1:(0.1 to 0.15):(0.025 to 0.04);
(2) the first solvent comprises ethanol;
(3) the second lithium salt comprises lithium acetate, lithium chloride, lithium nitrate, lithium citrate, or any combination thereof;
(4) the pyrophosphate source comprises pyrophosphoric acid, ammonium pyrophosphate, ammonium hydrogen pyrophosphate, or any combination thereof; or
(5) a temperature of the evaporation of the first solvent is 80°C to 120°C.

9. A cathode plate, comprising: a current collector, and a cathode material disposed on at least one side of the current collector in a thickness direction of the current collector, wherein the cathode material comprises the lithium supplement according to any one of claims 1 to 3.

10. A secondary battery, comprising: a cathode plate, an anode plate, and a separator, wherein the cathode plate is the cathode plate according to claim 9.
